# EUROPEAN PATENT APPLICATION

(11) **EP 3 226 216 A1**
(43) Date of publication of application: **04.10.2017**
(21) Application number: 17162022.2
(22) Date of filing: 21.03.2017
(51) Int. Cl.: G07G 1/00, G07G 3/00, G01G 19/414, G01G 19/415

(54) **WEIGHING DEVICE**

(30) Priority: 01.04.2016 JP 2016073833
(71) Applicant: Toshiba TEC Kabushiki Kaisha, Tokyo 141-0032 (JP)
(72) Inventor: OKAMURA, Atsushi, Shinagawa-ku, Tokyo 141-8562 (JP)
(74) Representative: Takeuchi, Maya

(57) **Abstract**

A weighing device which recognizes generation of fraud which makes the weight of a commodity registered for sales appears to be lighter is provided.

When a weighing unit weighs weight of a commodity (article), a weighing fraud recognition unit recognizes that there is generation of weighing fraud that makes the weight of the commodity appear to be lighter than actual weight or a possibility of the generation of the weighing fraud. When the weighing fraud recognition unit recognizes that there is the generation of the weighing fraud or the possibility of the generation of the weighing fraud, the weighing indeterminacy unit does not determine the weighing performed by the weighing unit.

## Description

### FIELD

The present invention relates to self checkout technologies in general, and embodiments described herein relate in particular to a weighing device and the corresponding system, as well as a method for detecting weighing fraud.

### BACKGROUND

Recently, a shop such as a supermarket is provided with a self-checkout device (self point of sales (POS) device, self-registration device) for customers to perform sales registration and settlement of commodities to purchase. In such a store, a sales form in which customers perform sales registration and settlement of commodities is adopted. In such a self-checkout device, customers hold commodities over a reading window of a reading device to perform the sales registration of the commodities. In the self-checkout device, a weighing instrument is built in a placing table on which a commodity for which sales registration is completed is placed, and the weight of the commodity for which sales registration is completed is weighed by the commodity of which the sales registration is completed being placed on the placing table. Registration mistake and fraud prevention is done by comparing the weight of the weighed commodity with the registered weight registered in advance as the weight of the commodity and confirming whether or not the commodity registered for sales and the weighed commodity are the same commodity.

However, in such a self-checkout device, there is a risk that fraud behavior of making the weight of the commodity appear to be lighter is performed by a customer registering for sales of an inexpensive and lightweight commodity, instead of the commodity, a more expensive and heavier commodity being placed on the placing table, and then putting the hand of the customer on the placing table and lifting the placing table when the weighing instrument performs weighing. When such fraud behavior is performed, there is a risk that the self-checkout device of the related art erroneously judges that a more inexpensive and lighter commodity which is registered for sales is placed on the placing table. Therefore, realization of effective prevention measures against such fraud behavior is desired.

To solve such problems, there is provided a weighing device, comprising:
a weighing unit configured to weigh weight of an article;
a weighing fraud recognition unit configured to recognize that there is generation of weighing fraud which makes the weight of the article appear to be lighter than actual weight or a possibility of the generation of the weighing fraud when the weighing unit performs the weighing; and
a weighing indeterminacy unit configured not to determine the weighing performed by the weighing unit when the weighing fraud recognition unit recognizes that there is the generation of the weighing fraud or the possibility of the generation of the weighing fraud.

Preferably, the device further comprises:
a notification unit configured to notify that the weighing fraud is recognized on a condition that the weighing fraud recognition unit recognizes that there is generation of the weighing fraud or a possibility of the generation of the weighing fraud.

Preferably still, the article is placed on a placing tray, and
wherein the weighing fraud recognition unit recognizes that there is generation of the weighing fraud or a possibility of the generation of the weighing fraud by recognizing that there is a possibility that a force is applied to the placing tray or the article in a direction which lifts the placing tray or the article.

Preferably yet, the weighing fraud recognition unit recognizes that there is generation of the weighing fraud or a possibility of the generation of the weighing fraud on a condition that an object that is not present when the weighing unit starts the weighing is detected in a region of an outside of an outer edge of the placing tray from among an image which is captured by an imaging unit configured to capture an image including an outer edge of the placing tray in full.

Preferably further, the weighing fraud recognition unit recognizes that there is generation of the weighing fraud or a possibility of the generation of the weighing fraud on a condition that distance from a predetermined position above the placing tray to the placing tray is detected to be smaller than a predetermined value.

The invention also relates to a weighing system, comprising:
a weighing means configured to weigh weight of an article;
a weighing fraud recognition means configured to recognize that there is generation of weighing fraud which makes the weight of the article appear to be lighter than actual weight or a possibility of the generation of the weighing fraud when the weighing means performs the weighing; and
a weighing indeterminacy means configured not to determine the weighing performed by the weighing means when the weighing fraud recognition means recognizes that there is the generation of the weighing fraud or the possibility of the generation of the weighing fraud.

Suitably, the system further comprises:
a notification means configured to notify that the weighing fraud is recognized on a condition that the weighing fraud recognition means recognizes that there is generation of the weighing fraud or a possibility of the generation of the weighing fraud.

Suitably still, the article is placed on a placing means, and
wherein the weighing fraud recognition means recognizes that there is generation of the weighing fraud or a possibility of the generation of the weighing fraud by recognizing that there is a possibility that a force is applied to the placing means or the article in a direction which lifts the placing means or the article.

Suitably yet, the weighing fraud recognition means recognizes that there is generation of the weighing fraud or a possibility of the generation of the weighing fraud on a condition that an object that is not present when the weighing means starts the weighing is detected in a region of an outside of an outer edge of the placing means from among an image which is captured by an imaging means configured to capture an image including an outer edge of the placing means in full.

Suitably further, the weighing fraud recognition means recognizes that there is generation of the weighing fraud or a possibility of the generation of the weighing fraud on a condition that distance from a predetermined position above the placing means to the placing means is detected to be smaller than a predetermined value.

The invention further relates to a method for detecting a weighing fraud, comprising the steps of:
- weighing weight of an article by a weighing unit;
- recognizing, by a weighing fraud recognition unit, that there is generation of weighing fraud which makes the weight of the article appear to be lighter than actual weight or a possibility of the generation of the weighing fraud when the weighing unit performs the weighing; and
- not determining, by a weighing indeterminacy unit, the weighing performed by the weighing unit when the weighing fraud recognition unit recognizes that there is the generation of the weighing fraud or the possibility of the generation of the weighing fraud.

Typically, the method further comprises the step of:
- notifying, by a notification unit, that the weighing fraud is recognized on a condition that the weighing fraud recognition unit recognizes that there is generation of the weighing fraud or a possibility of the generation of the weighing fraud.

Typically still, the method further comprises the steps of:
- placing on a placing tray, and
- recognizing, by wherein the weighing fraud recognition unit, that there is generation of the weighing fraud or a possibility of the generation of the weighing fraud by recognizing that there is a possibility that a force is applied to the placing tray or the article in a direction which lifts the placing tray or the article.

Typically yet, the method further comprises the step of:
- recognizing, by the weighing fraud recognition unit, that there is generation of the weighing fraud or a possibility of the generation of the weighing fraud on a condition that an object that is not present when the weighing unit starts the weighing is detected in a region of an outside of an outer edge of the placing tray from among an image which is captured by an imaging unit configured to capture an image including an outer edge of the placing tray in full.

Typically further, the method further comprises the step of:
- recognizing, by the weighing fraud recognition unit, that there is generation of the weighing fraud or a possibility of the generation of the weighing fraud on a condition that distance from a predetermined position above the placing tray to the placing tray is detected to be smaller than a predetermined value.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is an external perspective view of a self-checkout device according to this embodiment.
FIG. 2 is a front view of a commodity placing table on a front left side of the self-checkout device.
FIG. 3 is a hardware block diagram illustrating a hardware configuration of the self-checkout device.
FIG. 4 is a functional block diagram illustrating a functional configuration of a control unit of the self-checkout device.
FIGS. 5A and 5B are views illustrating a state where the self-checkout device performs weighing in a state without fraud, FIG. 5A is a side view of the commodity placing table, and FIG. 5B is a view illustrating an example of an image captured by a camera.
FIGS. 6A and 6B are vies illustrating a state where the self-checkout device performs the weighing in a state with fraud, FIG. 6A is a side view of the commodity placing table, and FIG. 6B is a view illustrating an example of an image captured by the camera.
FIG. 7 is a view illustrating a method for recognizing fraud by the weighing fraud recognition unit.
FIG. 8 is a flowchart illustrating the flow of processing performed by the self-checkout device.
FIG. 9 is a view illustrating another configuration example of the weighing fraud recognition unit.

### DETAILED DESCRIPTION

In general, according to one embodiment, there is provided a weighing device which recognizes generation of fraud which makes the weight of a commodity registered for sales appear to be lighter.

A weighing device of the embodiments includes a weighing unit, a weighing fraud recognition unit, and a weighing indeterminacy unit. The weighing unit weighs weight of an article. The weighing fraud recognition unit recognizes that there is generation of weighing fraud which makes the weight of the article appear to be lighter than actual weight or a possibility of the generation of the weighing fraud when the weighing unit performs the weighing. The weighing indeterminacy unit does not determine the weighing performed by the weighing unit when the weighing fraud recognition unit recognizes that there is the generation of the weighing fraud or the possibility of the generation of weighing fraud.

The embodiments above may be applied mutatis mutandis to a weighing system comprising corresponding means. They may also be applied to a method for detecting weighing fraud.

### (Description of Hardware Configuration of Embodiment)

Hereinafter, a weighing device according to the embodiment will be described with reference to the drawings. The embodiment to be described below is an embodiment of the weighing device, and does not limit a configuration, specification, and the like thereof. This embodiment relates to a self-checkout device which is an example of a weighing device which is introduced in a shop such as a supermarket.

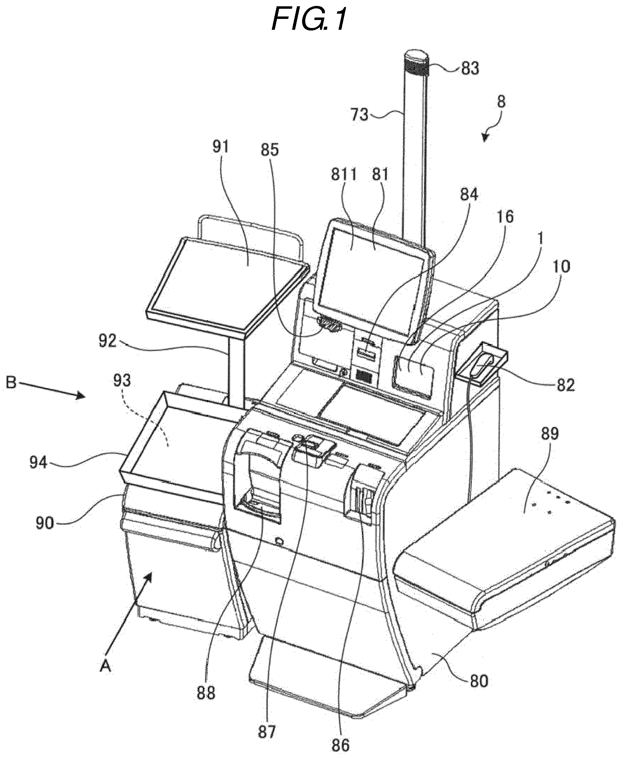

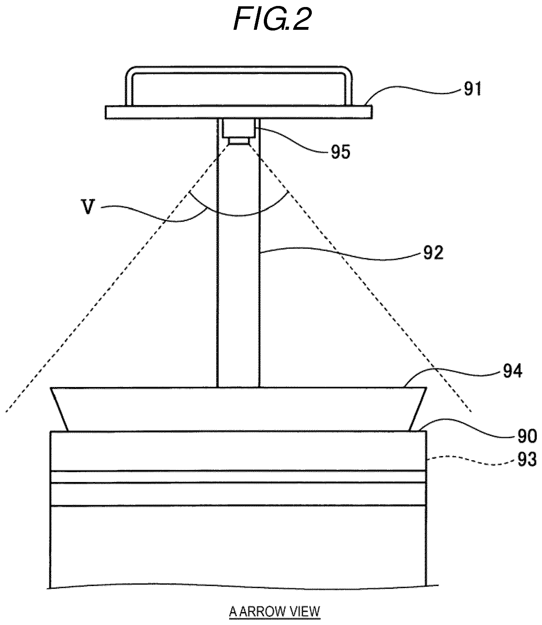

FIG. 1 is a perspective view illustrating an external appearance of the self-checkout device 8. In addition, FIG. 2 is a front view (A arrow view in FIG. 1) of a commodity placing table 90 of the self-checkout device 8 which is a characteristic configuration portion of the exemplary embodiment.

As illustrated in FIG. 1, the self-checkout device 8 includes a reading device 1, a main body 80, a display 81, a touch panel 811, a hand scanner 82, a warning light 83, a card insertion port 84, a receipt issuing port 85, a banknote deposit and withdrawal port 86, a coin input port 87, a coin taking out port 88, commodity placing tables 89 and 90, a temporary placing table 91, a support column 92, a weighing instrument 93, and a placing tray 94.

In addition, as illustrated in FIG. 2, the self-checkout device 8 includes a camera 95 installed downward on a rear side of the temporary placing table 91.

The main body 80 includes the display 81 on an upper portion thereof and includes a reading window 16 of the reading device 1, the card insertion port 84, the receipt issuing port 85, the banknote deposit and withdrawal port 86, the coin input port 87, and the coin taking out port 88 on a front surface thereof.

The display 81 is a liquid crystal display provided with a touch panel 811 overlaid on a screen. The display 81 displays an accounting screen for confirming the total price of a commodity, deposit amount, changing amount, or the like including a confirmation screen for confirming commodity candidates and commodity information of a commodity read by the reading device 1. The touch panel 811 receives an operation corresponding to the display content of the display 81.

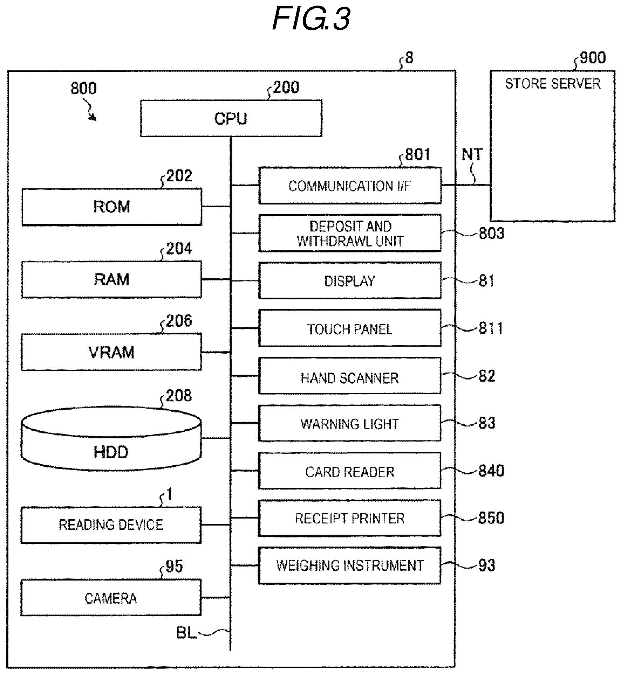

The reading device 1 is disposed below the display 81 with the reading window 16 facing a front surface of a user. An infrared sensor 10 is disposed on an inside portion of the reading device 1 (at back of reading window 16) with a light emitting surface and a light receiving surface facing a reading window 16 side. The infrared sensor 10 detects that the commodity is held over the reading window 16. The reading device 1 images the detected commodity and transmits data based on the captured image to a control unit 800 to be described below (FIG. 3) in the main body 80.

The hand scanner 82 is disposed on a front right side of the main body 80. The hand scanner 82 reads a bar code affixed to the commodity and transmits the bar code to the control unit 800 in the main body 80. The hand scanner 82 is used to read the commodity information on heavy objects or large-sized commodities, which is difficult to hold over the reading window 16 of the reading device 1.

The warning light 83 is provided on an upper portion of a pole 73 stood up on a top plate of the main body 80. The warning light 83 lights up when there is an abnormality in operation in the self-checkout device 8 or when calling a store clerk.

The card insertion port 84 is provided at a center of the main body 80. The card insertion port 84 is a portion of a card reader 840 (FIG. 3) to be described below which is built in the main body 80, and receives the insertion of a point card or a credit card. In addition, the receipt issuing port 85 is provided on a left side of the card insertion port 84. The receipt issuing port 85 discharges the receipt printed by a receipt printer 850 (FIG. 3) to be described below which is built in the main body 80.

The banknote deposit and withdrawal port 86 is provided in a middle portion of the main body 80 and performs reception of payment for settlement banknotes and payout of changing banknotes. The coin input port 87 receives input of coins at the time of settlement. The coin taking out port 88 receives payout changing coins.

The commodity placing table 89 is for temporarily placing a shopping basket (not illustrated) containing unsettled commodities and is provided on a front right side of the main body 80. The commodity placing table 90 is for placing a settled commodity and is provided on a front left side of the main body 80. The placing tray 94 having an outer edge extending upward in order to prevent falling of the placed commodity is placed on the commodity placing table 90. The temporary placing table 91 is a placing table which temporarily places commodities which are not suitable for placing on the placing tray 94 for weighing such as breakables, among the settled commodities. The temporary placing table 91 is attached to an upper end of the support column 92 stood up on a back of the upper surface of the commodity placing table 90.

The weighing instrument 93 is built in the commodity placing table 90 and weighs the weight applied to the commodity placing table 90 and temporary placing table 91. The weighing instrument 93 includes a load cell (not illustrated) and an analog to digital conversion circuit (not illustrated). The load cell is connected to the commodity placing table 90 and is a sensor for measuring the weight of the commodity placed on the commodity placing table 90. The load cell outputs the weighed value corresponding to the weight of the object to be weighed including the commodity as an analog value. The analog to digital conversion circuit converts the analog value into a digital value and outputs the digital value.

The camera 95 is an imaging device having an imaging element such as a charge coupled device (CCD) or a complementary metal-oxide semiconductor (CMOS). As illustrated in FIG. 2, the camera 95 is installed on a rear surface side of the temporary placing table 91 toward the direction of the commodity placing table 90. As will be described below in detail, the camera 95 images a region of imaging visual field V including the placing tray 94 so as to include an outer edge of the placing tray 94 placed on the commodity placing table 90 in full.

Next, a hardware configuration of the self-checkout device 8 will be described using FIG. 3. FIG. 3 is a hardware block diagram illustrating the hardware configuration of the self-checkout device 8.

As illustrated in FIG. 3, the self-checkout device 8 has the control unit 800 as an information processing unit therein. The control unit 800 is configured by a central processing unit (CPU) 200, a read only memory (ROM) 202, a random access memory (RAM) 204, a video RAM (VRAM) 206, a hard disk drive (HDD) 208, or the like and includes configurations of the general computer system. The ROM 202 stores fixed data such as various programs and various data to be executed by the CPU 200. The RAM 204 temporarily stores variable data or programs when the CPU 200 executes various programs. The VRAM 206 generates a display image to be displayed on the display 81.

The HDD 208 stores a program executed by the CPU 200, and data files such as a price look-up (PLU) file, a feature amount file, a weight data file, and sales data. The PLU file is a data file in which the price of a commodity and commodity information (commodity code) are registered in association with each other. The feature amount file is a data file in which feature amount of the commodity and the commodity code are registered in association with each other. The weight data file is a data file in which the weight of the commodity and the commodity code are registered in association with each other. The sales data is a data file in which the sales record handled by the self-checkout device 8 is registered. All or a portion of these programs and data files are read into the RAM 204 and used when the self-checkout device 8 is activated.

The program executed by the control unit 800 is recorded on a computer-readable recording medium such as a CD-ROM, a flexible disk (FD), a CD-R, a digital versatile disk (DVD) in a file in an installable format or an executable format and is provided. In addition, the program executed by the control unit 800 may be stored on a computer connected to a network, and may be provided by downloading via the network. Further, the program may be provided or distributed via a network such as the Internet.

The reading device 1, a communication I/F 801, a deposit and withdrawal unit 803, the display 81, the touch panel 811, the hand scanner 82, the warning light 83, the card reader 840, the receipt printer 850, the weighing instrument 93, and the camera 95 are further connected to the control unit 800 via various interfaces and buses BL. Each of these portions is controlled by the control unit 800.

The communication I/F 801 mediates data communication between a store server 900 and the control unit 800. This communication is performed using a local communication network NT provided in the store.

The store server 900 is installed in a backyard or the like of the shop. The HDD (not illustrated) of the store server 900 stores the commodity data distributed to the self-checkout device 8.

The store server 900 distributes the commodity data to the self-checkout device 8. The self-checkout device 8 stores the commodity data distributed from the store server 900 in the HDD 208 or the like. Further, the store server 900 receives the sales data from the HDD 208 at a predetermined time, for example, after the end of the business day.

The deposit and withdrawal unit 803 receives deposits from the banknote deposit and withdrawal port 86 and the coin input port 87, and withdraws change to be paid out from the banknote deposit and withdrawal port 86 and the coin taking out port 88.

The card reader 840 reads information registered in the point card or the credit card. In addition, the receipt printer 850 performs printing of the receipt. (Description of Series of Processing Contents Performed by Self-checkout Device)

The self-checkout device 8 performs a commodity identification which identifies a commodity purchased by a customer, a sales registration which registers commodity information of a commodity purchased by a customer, a settlement which executes a payment procedure, weighing which weighs the weight of a commodity registered for sales, weighing fraud recognition which recognizes whether or not weighing fraud that makes the weight of a commodity appear to be lighter than actual weight is performed when the weighing is performed, weighing indetermination which does not determine the result of the weighing when recognizing that the weighing fraud is performed, and notification which notifies of generation of weighing fraud.

The control unit 800 performs the commodity identification which identifies a commodity held over the reading window 16 based on data based on the captured image captured and output by the reading device 1. More specifically, the control unit 800 first calculates a feature amount of an object (commodity) as a subject based on data based on the captured image. Subsequently, the control unit 800 inquires about the information on the object matching the feature amount with respect to the feature amount file described above. Accordingly, the control unit 800 identifies the commodity. When a barcode is included in the captured image captured and output by the reading device 1, the control unit 800 identifies the commodity by recognizing the content of the barcode.

The control unit 800 further performs the sales registration and the settlement with respect to the identified commodity.

In the sales registration, the reading device 1 outputs data based on the image capturing an external appearance of the commodity. The control unit 800 obtains the price and the weight of the commodity based on the data output by the reading device 1 or the content of the bar code read by the hand scanner 82 from the data file stored by the HDD 208. The control unit 800 temporarily stores in a predetermined region of the RAM 204 by collecting the data on the commodities to be purchased by a customer.

When the self-checkout device 8 receives a predetermined operation after the sales registration, the control unit 800 starts the settlement. In the account, the control unit 800 sums the price of each commodity temporarily stored in a predetermined region such as the RAM 204 in the sales registration, displays information such as the price to be paid by the user on the display 81 and receives an accounting operation by the user. Upon completion of the accounting operation by the user, the control unit 800 determines the transaction and additionally records the transaction to the sales data of the HDD 208 as one transaction.

When performing the settlement, the weighing instrument 93 weighs the weight of the commodities placed on the placing tray 94 and the temporary placing table 91. The weighing instrument 93 calculates the weight of only the commodity by subtracting the weight of the placing tray 94 measured and stored in advance from the weight applied to the commodity placing table 90.

The self-checkout device 8 performs the settlement described above on a condition that the weight weighed in this way matches the total weight of the commodities for which the sales registration is performed. When the weighed weight does not match the total weight of the commodities registered for sales, the self-checkout device 8 does not perform the settlement based on the recognition that fraud is performed.

When the weight of the commodity is weighed, the self-checkout device 8 performs the weighing fraud recognition which recognizes whether or not the weighing fraud is performed. When the self-checkout device 8 recognizes that the weighing fraud is performed, the self-checkout device 8 performs the weighing indeterminacy which does not determine the weighed result, and also performs the notification which notifies of the generation of the weighing fraud.

### (Description of Functional Configuration of Self-checkout Device)

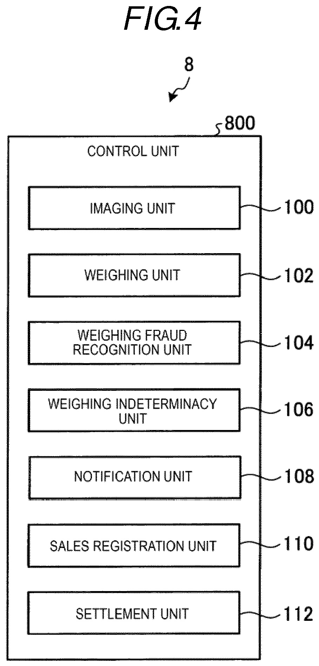

Next, using FIG. 4, a functional configuration of the control unit 800 of the self-checkout device 8 will be described. FIG. 4 is a functional block diagram illustrating a functional configuration performing the sales registration, the settlement, the weighing, the weighing fraud recognition, a weighing indetermination, and the notification which are main portions of the exemplary embodiment among the functional configurations of the control unit 800 of the self-checkout device 8.

As illustrated in FIG. 4, the control unit 800 of the self-checkout device 8 includes an imaging unit 100, a weighing unit 102, a weighing fraud recognition unit 104, a weighing indeterminacy unit 106, a notification unit 108, a sales registration unit 110 and a settlement unit 112.

The imaging unit 100 images a region of the imaging visual field V including the placing tray 94 by controlling the camera 95.

The weighing unit 102 weighs the weight of the commodity placed on the placing tray 94 by controlling the weighing instrument 93.

When the weighing unit 102 controls the weighing instrument 93 to perform the weighing, the weighing fraud recognition unit 104 recognizes the generation of the weighing fraud which makes the weight of the commodity placed on the placing tray 94 appear to be lighter than actual weight. The specific method for recognizing the weighing fraud will be described below.

The weighing indeterminacy unit 106 does not determine the result of the weighing performed by the weighing unit 102 controlling the weighing instrument 93 when the weighing fraud recognition unit 104 recognizes the generation of the weighing fraud.

When the weighing fraud recognition unit 104 recognizes the weighing fraud, the notification unit 108 informs the customer of the weighing fraud by messages such as "cannot weigh", "please keep away from placing table", or the like. Of course, the warning light 83 may be lit to notify clerks of the shop.

The sales registration unit 110 registers commodity information (commodity name, commodity code, weight, or the like) of the commodity purchased by the customer.

The settlement unit 112 performs a payment procedure for the total amount of the commodities purchased by the customer based on the processing result of the sales registration unit 110.

### (Description of Weighing Fraud Recognition)

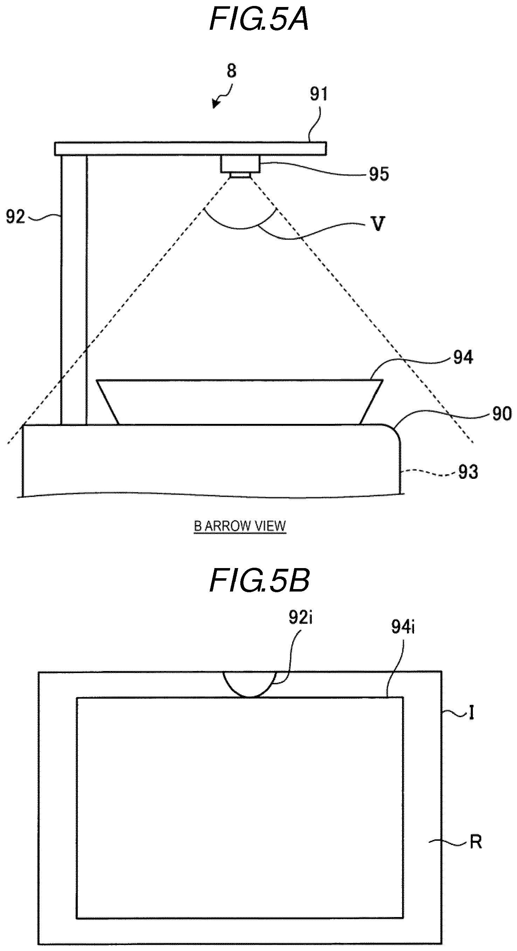

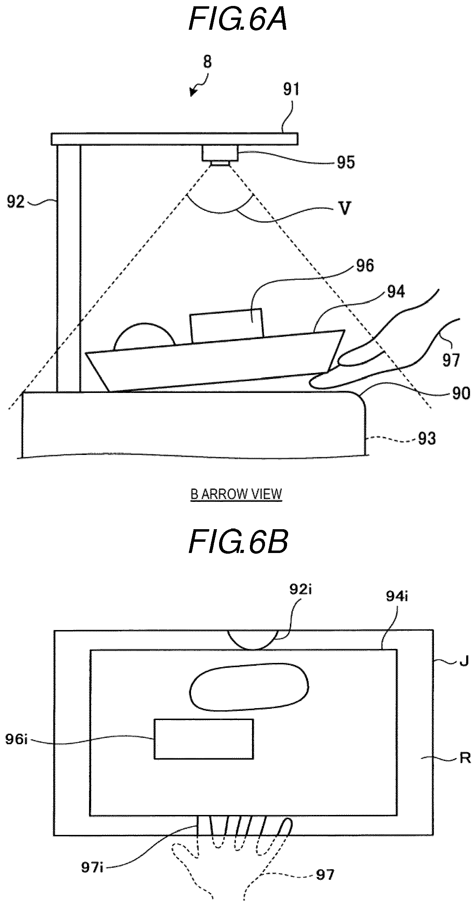

Next, using FIGS. 5A, 5B, 6A and 6B the contents of the weighing fraud recognition performed by the weighing fraud recognition unit 104 will be described. FIGS. 5A and 5B are views illustrating a state where the self-checkout device 8 performs the weighing in a state where there is no fraud, Fig. 5A is a side view illustrating the commodity placing table 90 (B arrow view in FIG. 1). FIG. 5B is a view illustrating an example of an image captured by the camera 95. In addition, FIGS. 6A and 6B are views illustrating a state where the self-checkout device 8 performs the weighing in a state where there is fraud, 6A is a side view of the commodity placing table 90 (B arrow view in FIG. 1). FIG. 6B is a view illustrating an example of an image captured by the camera 95.

In the state of FIG. 5A, that is, in a state where there is no fraud, the camera 95 captures the image I illustrated in FIG. 5B. Hereinafter, the image I acquired in a state where there is no fraud is referred to as a reference image I. The reference image I may be imaged only by one when the weighing fraud recognition is started. In addition, since it is necessary to acquire the reference image I in a state where there is no fraud, for example, it is preferable that the image be taken at the timing when the weighing instrument 93 instructs the weight of the placing tray 94 whose weight is known in advance. Of course, the reference image I may be imaged in a state where the commodity 96 is placed as long as the fraud is not performed.

In the reference image I, an image 94i of the placing tray 94 and an image 92i of the support column 92 are reflected as illustrated in FIG. 5B.

In the reference image I, a region R sandwiched between an outer edge of the image 94i of the placing tray 94 and an outer edge of the reference image I is formed. In the region R, fixed objects such as the image 92i of the support column 92 are reflected.

On the other hand, FIG. 6A illustrates a state where the customer puts his hands 97 on the edge of the placing tray 94 and lifts the edge of the placing tray 94 upward. When lifting the edge of the placing tray 94 in this manner, since a force is applied in a direction to reduce the weight of the commodity placed on the placing tray 94, the load applied to the weighing instrument 93 decreases and the weighed weight decreases compared to the weight to be originally weighed. In other words, the weighing instrument 93 erroneously recognizes that a lighter commodity is placed on the placing tray 94.

In the image J captured by the camera 95 in the state of FIG. 6A, as illustrated in FIG. 6B, the image 96i of the commodity 96 and the image 97i of the hand 97 in the region R reflect on the reference image I. In addition, since the camera 95 observes the placing tray 94 from just above, even when the edge of the placing tray 94 is lifted, the position of the image 94i of the placing tray 94 hardly changes between the reference image I and the image J. Hereinafter, the image J captured during weighing of the commodity 96 in this manner is referred to as an image J during weighing. The image J during weighing is imaged at predetermined time intervals while the self-checkout device 8 performs the weighing. In other words, in the image J during weighing, an image captured when fraud is performed as illustrated in FIG. 6B and an image captured when fraud is not performed are mixed.

The weighing fraud recognition unit 104 repeatedly compares the reference image I to the image J during weighing captured at any time to detect whether or not the image 97i of the hand 97 exists in the region R. When the image 97i of the hand 97 is detected in the region R, it is recognized that the weighing fraud is performed.

Recognition of the weighing fraud recognition unit 104 is not limited to the image 97i of the hand 97. In other words, since it is also assumed that the customer inserts a rod-shaped object into the bottom of the placing tray 94 to lift the edge of the placing tray 94, the weighing fraud recognition unit 104 detects objects which reach the image 94i of the placing tray 94 from an outer edge of the region R.

Further, the weighing fraud recognition unit 104 may detect that there is an object extending from the outer edge of the region R toward the image 94i of the placing tray 94, recognize that there is a possibility that the placing tray 94 is lifted, and detect the weighing fraud before actual fraud is performed.

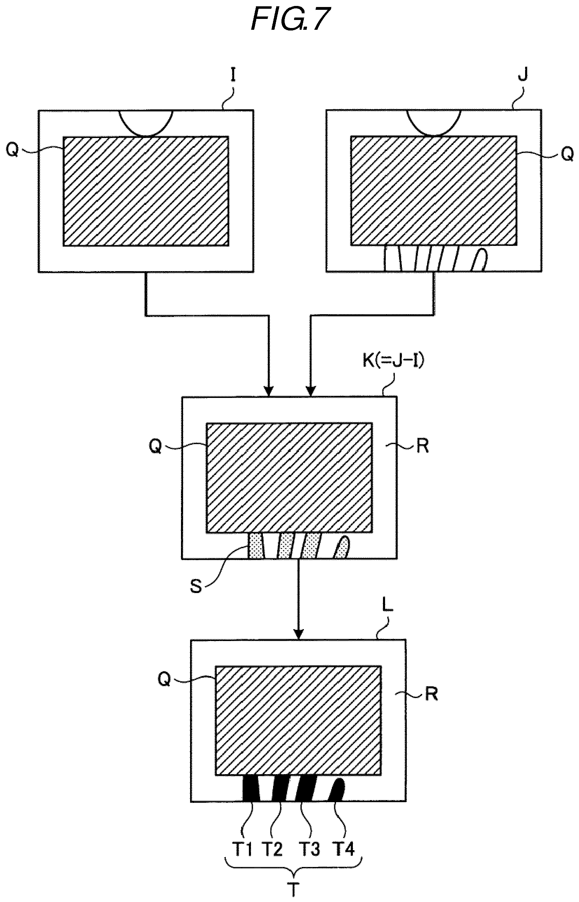

Next, using FIG. 7, the contents of the specific process of the weighing fraud recognition performed by the weighing fraud recognition unit 104 will be described. FIG. 7 is a view illustrating a method for recognizing fraud by the weighing fraud recognition unit 104.

As illustrated in FIG. 7, the weighing fraud recognition unit 104 controls the imaging unit 100 in a state where the edge of the placing tray 94 is not lifted, and images the placing tray 94. In this manner, the reference image I is acquired.

Further, the weighing fraud recognition unit 104 controls the imaging unit 100 in a state where the commodity is placed on the placing tray 94, and images the placing tray 94. In this manner, the image J during weighing is acquired. Whether or not the commodity is placed on the placing tray 94 is determined by monitoring the load applied to the weighing instrument 93 by the weighing fraud recognition unit 104.

Next, the weighing fraud recognition unit 104 performs a frame difference subtracting the reference image I from the image J during weighing. At this time, masking is applied to a region Q indicating the placing tray 94, and the frame difference is performed only in the region R outside the placing tray 94. Assuming that the result of performing the frame difference is the frame difference image K, when there is an object intruded into the region R, a brightness change region S having a difference in brightness is formed in the region of the intruded object in the frame difference image K.

Since the region of the fixed object (for example, the image 92i of the support column 92) existing in the region R is always observed at the same position with respect to the camera 95, no difference in brightness occurs due to the frame difference. Therefore, the brightness change region S is not formed in the region of the fixed object in the frame difference image K.

Further, the weighing fraud recognition unit 104 binarizes an inside portion of the region R of the frame difference image K with a predetermined brightness to generate a binary image L. In this binary image L, a region T having brightness equal to or greater than a predetermined value existing in the inside portion of the region R is identified as the intruded object for the region R.

When the region T indicating the identified intruded object reaches the region Q of the placing tray 94 across the region R (for example, the regions T1, T2, T3 of FIG. 7), a possibility of lifting the placing tray 94 is high. On the other hand, in the region T to be identified, there also exists a region which does not reach the region Q as in the region T4 in FIG. 7. In this embodiment, even in the region T which does not reach the region Q, at this point, it is determined that there is a possibility of lifting the placing tray 94 and it is recognized that the weighing fraud is performed.

The method of image processing performed by the weighing fraud recognition unit 104 is not limited to the above-described method, and the intruded object may be detected by other image processing methods.

### (Description of Flow of Processing Performed by Self-checkout Device)

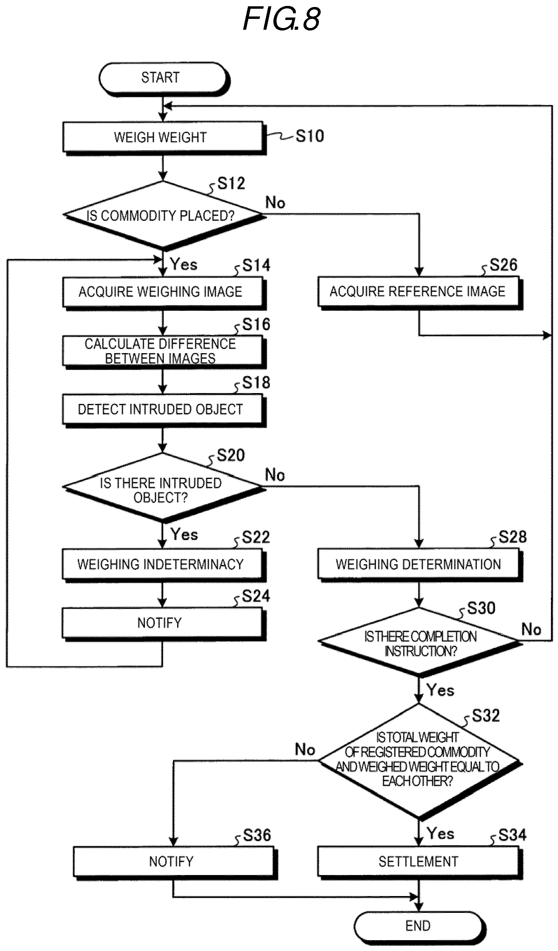

Next, using FIG. 8, a flow of processing performed by the self-checkout device 8 will be described. FIG. 8 is a flowchart illustrating the flow of processing performed by the self-checkout device 8. The sales registration for registering the commodity information of the commodity purchased by the customer is assumed to be already completed, and FIG. 8 illustrates the flow of the subsequent processing.

The weighing unit 102 weighs the weight of the commodity for which the sales registration is completed by controlling the weighing instrument 93 (Act 10).

Based on the weighing result of the weighing instrument 93, the weighing unit 102 determines whether the commodity is placed on the placing tray 94 (Act 12). When the commodity is placed (Act 12; Yes), the process proceeds to Act 14. Otherwise (Act 12; No), the process proceeds to Act 26.

The imaging unit 100 images the placing tray 94 on which the commodity is placed and acquires the image J during weighing By controlling the camera 95 (Act 14).

The weighing fraud recognition unit 104 performs a difference calculation by subtracting the reference image I captured in Act 26 (to be described later) from the image J during weighing captured in Act 14 to obtain a frame difference image K (Act 16).

The weighing fraud recognition unit 104 subsequently detects the intruded object from the frame difference image K (Act 18).

The weighing fraud recognition unit 104 performs weighing fraud recognition for determining whether or not the intruded object is detected by the process of Act 18 (Act 20). When the intruded object is detected (Act 20; Yes), the process proceeds to Act 22. Otherwise (Act 20; No), the process proceeds to Act 28.

The weighing indeterminacy unit 106 performs a weighing indeterminacy which does not determine the weighing result of the weighing instrument 93 (Act 22).

The notification unit 108 determines that the weighing fraud is performed and performs notification for notifying the customer to keep away from the placing tray 94 on the display 81 (Act 24). At this time, the warning light 83 may notify the clerk of the shop. In this case, the clerk noticed the notification of the warning light 83 teaches the customer a method of the weighing. After Act 24, the process returns to Act 14 to acquire the image during weighing again.

In Act 12, when it is determined that no commodity is placed on the placing tray 94 (Act 12; No), the imaging unit 100 images the placing tray 94 on which the commodity is not placed and acquires the reference image I by the imaging unit 100 controlling the camera 95 (Act 26).

In Act 20, when the intruded object is not detected, the weighing unit 102 determines the weighing result of the weighing instrument 93 (Act 28).

The control unit 800 determines whether or not there is an instruction that the placement of the commodity is completed from the customer (Act 30). When there is a completion instruction (Act 30; Yes), the process proceeds to Act 32. Otherwise (Act 30; No), the process returns to Act 10 to continue placement of the commodity. Completion of placement of the commodity may be determined, for example, by detecting that the customer presses the completion button (not illustrated) displayed on the display 81 by the control unit 800 by the touch panel 811.

The sales registration unit 110 determines whether or not the total weight of the registered commodities and the total weight of the commodities weighed by the weighing instrument 93 are equal to each other (Act 32). When both total weights are equal (Act 32; Yes), the process proceeds to Act 34. Otherwise (Act 32: No), the process proceeds to Act 36.

The settlement unit 112 performs the settlement for paying the total amount of the commodity purchased by the customer (Act 34). Thereafter, the processing of FIG. 8 is terminated.

In Act 32, when the total weight of the registered commodities and the total weight of the commodities weighed by the weighing instrument 93 are not equal to each other (Act 32; No), since the weight of the commodity purchased is not accurately weighed, the notification unit 108 notifies the customer to confirm whether or not there is a misplacement of the commodity on the display 81, for example (Act 36). Thereafter, the processing of FIG. 8 is terminated. At this time, the customer confirms whether or not there is misplacement of the commodity on the placing tray 94, and causes the self-checkout device 8 to perform the process of FIG. 8 again.

### (Description of another Method of Implementing Weighing Fraud Recognition)

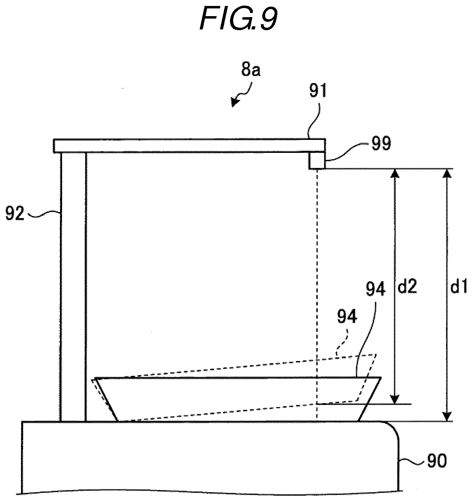

Next, another embodiment of the weighing fraud recognition unit 104 will be described using FIG. 9. FIG. 9 is a view illustrating another configuration example of the weighing fraud recognition unit 104.

A self-checkout device 8a includes a distance measuring device 99 on the rear side of the temporary placing table 91. The distance measuring device 99 includes an irradiating portion (not illustrated) for irradiating an LED or a laser diode and a light receiving portion (not illustrated) for receiving the reflected light reflected from a surface of the measuring target among the light irradiated by the irradiating portion, and measures the distance to the measuring target based on the principle of triangulation.

As illustrated in FIG. 9, the distance measuring device 99 is installed so as to measure the distance d1 to the bottom surface of the placing tray 94. As described above, when the placing tray 94 is lifted by fraud, it is measured that the distance from the distance measuring device 99 to the bottom surface of the placing tray 94 is the distance d2 smaller than the distance d1.

When the distance d2 measured in this manner is smaller than the distance d1 by a predetermined value or more, the weighing fraud recognition unit 104 determines that the weighing fraud is being performed.

There are various other methods in a method for recognizing that the placing tray 94 is lifted intentionally. The weighing fraud recognition unit 104 may recognize the weighing fraud by using any of these methods. For example, when a plurality of pressure sensors are installed on the surface of the commodity placing table 90 and the placing tray 94 is placed on the commodity placing table 90, the output of each pressure sensor is monitored as any time. In the process of placement of the commodity, it may be determined that the placing tray 94 is lifted intentionally when any output of the pressure sensor is decreased by a predetermined value or more.

As described above, according to the self-checkout device 8 (weighing device) of an first embodiment, when the weighing unit 102 weighs the weight of the commodity (article), the weighing fraud recognition unit 104 recognizes that there is generation of weighing fraud which makes the weight appear to be lighter than the actual weight or a possibility of the generation of the weighing fraud. When the weighing fraud recognition unit 104 recognizes that there is the generation of the weighing fraud or the possibility of the generation of the weighing fraud, the weighing indeterminacy unit 106 does not determine the result of the weighing performed by the weighing unit 102. Therefore, fraud transactions can be prevented in advance by recognizing the generation of weighing fraud which makes the weight of the commodity registered for sales appear to be lighter.

In addition, according to the self-checkout device 8, the notification unit 108 notifies of recognition of the weighing fraud on a condition that the weighing fraud recognition unit 104 recognizes that there is the generation of the weighing fraud or the possibility of the generation of the weighing fraud. Therefore, when recognizing the generation of the weighing fraud which makes the weight of the commodity registered for sales appear to be lighter, it is possible to draw attention by notifying the customer or store of the the weighing fraud.

Further, according to the self-checkout device 8, the commodities (goods) are placed on the placing tray 94, and the weighing fraud recognition unit 104 recognizes the generation of the weighing fraud by recognizing that there is a possibility that a force is applied to the placing tray 94 or commodities in a direction which lifts the placing tray 94 or commodities. Therefore, it is possible to reliably recognize that there is the generation of weighing fraud and the possibility of the generation of the weighing fraud.

According to the self-checkout device 8, the weighing fraud recognition unit 104 recognizes that there is the generation of the weighing fraud and the possibility of the generation of the weighing fraud from among the images (images J during weighing) captured by the imaging unit 100 capturing an image including the outer edge of the placing tray 94 in full, on a condition that the intruded object (object) which does not exist in the region R of an outside of the outer edge of the placing tray 94 when the weighing unit 102 starts weighing is detected. Therefore, the generation of the weighing fraud can be reliably recognized by simple image processing.

In addition, according to the self-checkout device 8a, the weighing fraud recognition unit 104 recognizes that there is the generation of the weighing fraud or the possibility of the generation of the weighing fraud on a condition that a distance from a predetermined position of an upper side of the placing tray 94 to the placing tray 94 is smaller than a predetermined value. Therefore, the generation of weighing fraud can be reliably recognized by simple signal processing.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

For example, although the embodiments described above are an example in which the exemplary embodiments are applied to the self-checkout device 8, in addition to the above, the exemplary embodiments can be also applied to a weighing machine for weighing commodities when commodities is sold by weight.

In the embodiments described above, although the weighing fraud recognition unit 104 recognizes that there is a possibility that a force is applied to the placing tray 94 in a direction which lifts the placing tray 94, the weighing fraud recognition unit 104 may recognize that there is the generation of the weighing fraud or the possibility of the generation of the weighing fraud by recognizing a possibility that a force is applied to the commodity 96 itself placed on the placing tray 94 instead of the placing tray 94 in the direction which lifts the commodity 96 upward.

## Claims

1. A weighing device, comprising:
a weighing unit configured to weigh weight of an article;
a weighing fraud recognition unit configured to recognize that there is generation of weighing fraud which makes the weight of the article appear to be lighter than actual weight or a possibility of the generation of the weighing fraud when the weighing unit performs the weighing; and
a weighing indeterminacy unit configured not to determine the weighing performed by the weighing unit when the weighing fraud recognition unit recognizes that there is the generation of the weighing fraud or the possibility of the generation of the weighing fraud.

2. The device according to claim 1, further comprising:
a notification unit configured to notify that the weighing fraud is recognized on a condition that the weighing fraud recognition unit recognizes that there is generation of the weighing fraud or a possibility of the generation of the weighing fraud.

3. The device according to claim 1 or 2,
wherein the article is placed on a placing tray, and
wherein the weighing fraud recognition unit recognizes that there is generation of the weighing fraud or a possibility of the generation of the weighing fraud by recognizing that there is a possibility that a force is applied to the placing tray or the article in a direction which lifts the placing tray or the article.

4. The device according to any one of claims 1 to 3,
wherein the weighing fraud recognition unit recognizes that there is generation of the weighing fraud or a possibility of the generation of the weighing fraud on a condition that an object that is not present when the weighing unit starts the weighing is detected in a region of an outside of an outer edge of the placing tray from among an image which is captured by an imaging unit configured to capture an image including an outer edge of the placing tray in full.

5. The device according to any one of claims 1 to 4,
wherein the weighing fraud recognition unit recognizes that there is generation of the weighing fraud or a possibility of the generation of the weighing fraud on a condition that distance from a predetermined position above the placing tray to the placing tray is detected to be smaller than a predetermined value.

6. A weighing system, comprising:
a weighing means configured to weigh weight of an article;
a weighing fraud recognition means configured to recognize that there is generation of weighing fraud which makes the weight of the article appear to be lighter than actual weight or a possibility of the generation of the weighing fraud when the weighing means performs the weighing; and
a weighing indeterminacy means configured not to determine the weighing performed by the weighing means when the weighing fraud recognition means recognizes that there is the generation of the weighing fraud or the possibility of the generation of the weighing fraud.

7. The system according to claim 6, further comprising:
a notification means configured to notify that the weighing fraud is recognized on a condition that the weighing fraud recognition means recognizes that there is generation of the weighing fraud or a possibility of the generation of the weighing fraud.

8. The system according to claim 6 or 7,
wherein the article is placed on a placing means, and
wherein the weighing fraud recognition means recognizes that there is generation of the weighing fraud or a possibility of the generation of the weighing fraud by recognizing that there is a possibility that a force is applied to the placing means or the article in a direction which lifts the placing means or the article.

9. The system according to any one of claims 6 to 8,
wherein the weighing fraud recognition means recognizes that there is generation of the weighing fraud or a possibility of the generation of the weighing fraud on a condition that an object that is not present when the weighing means starts the weighing is detected in a region of an outside of an outer edge of the placing means from among an image which is captured by an imaging means configured to capture an image including an outer edge of the placing means in full.

10. The system according to any one of claims 6 to 9,
wherein the weighing fraud recognition means recognizes that there is generation of the weighing fraud or a possibility of the generation of the weighing fraud on a condition that distance from a predetermined position above the placing means to the placing means is detected to be smaller than a predetermined value.

11. A method for detecting a weighing fraud, comprising the steps of:
- weighing weight of an article by a weighing unit;
- recognizing, by a weighing fraud recognition unit, that there is generation of weighing fraud which makes the weight of the article appear to be lighter than actual weight or a possibility of the generation of the weighing fraud when the weighing unit performs the weighing; and
- not determining, by a weighing indeterminacy unit, the weighing performed by the weighing unit when the weighing fraud recognition unit recognizes that there is the generation of the weighing fraud or the possibility of the generation of the weighing fraud.

12. The method according to claim 11, further comprising the step of:
- notifying, by a notification unit, that the weighing fraud is recognized on a condition that the weighing fraud recognition unit recognizes that there is generation of the weighing fraud or a possibility of the generation of the weighing fraud.

13. The method according to claim 11 or 12, further comprising the steps of:
- placing on a placing tray, and
- recognizing, by wherein the weighing fraud recognition unit, that there is generation of the weighing fraud or a possibility of the generation of the weighing fraud by recognizing that there is a possibility that a force is applied to the placing tray or the article in a direction which lifts the placing tray or the article.

14. The method according to any one of claims 11 to 13, further comprising the step of:
- recognizing, by the weighing fraud recognition unit, that there is generation of the weighing fraud or a possibility of the generation of the weighing fraud on a condition that an object that is not present when the weighing unit starts the weighing is detected in a region of an outside of an outer edge of the placing tray from among an image which is captured by an imaging unit configured to capture an image including an outer edge of the placing tray in full.

15. The method according to any one of claims 11 to 14, further comprising the step of:
- recognizing, by the weighing fraud recognition unit, that there is generation of the weighing fraud or a possibility of the generation of the weighing fraud on a condition that distance from a predetermined position above the placing tray to the placing tray is detected to be smaller than a predetermined value.
